# EUROPÄISCHE PATENTSCHRIFT

(11) **EP 2 096 537 B1**
(45) Veröffentlichungstag und Bekanntmachung des Hinweises auf die Patenterteilung: **06.06.2018**
(21) Anmeldenummer: 08003730.2
(22) Anmeldetag: 28.02.2008
(51) Int. Cl.: G06F 9/445

(54) **Verfahren, Anordnung und Datenverarbeitungsgerät zur Bereitstellung und Verteilung von Software**
Method, assembly and data processing device for preparing and distributing software
Procédé, agencement et appareil de traitement des données destinés à la préparation et la répartition de logiciels

(43) Veröffentlichungstag der Anmeldung: 02.09.2009
(73) Patentinhaber: Unify GmbH & Co. KG, 80807 München (DE)
(72) Erfinder: Bozionek, Bruno, 33178 Borchen (DE); Hanna, Thomas, 32758 Detmold (DE); Kunte, Klaus-Josef, 33178 Borchen (DE)
(74) Vertreter: Fritzsche, Thomas

(56) Entgegenhaltungen:
- US-A1- 2003 093 491
- US-A1- 2006 080 658
- US-B1- 7 162 538

## Beschreibung

Die Erfindung betrifft ein Verfahren zur Bereitstellung und Verteilung von Software und/oder Software-Korrekturprogrammen gemäß dem Oberbegriff des Patentanspruchs 1 und ein Datenverarbeitungsgerät zur Durchführung des Verfahrens gemäß dem Oberbegriff des Patentanspruchs 14.

Hersteller von Software bzw. software-betriebenen Geräten und deren Administratoren verlangen nach effizienten und kostengünstigen Wegen, die Software (Programme, Firmware) bzw. Software-Korrekturprogramme (sog. Service-Packs, Software-Updates, Patches etc.) zeitnah an ihre Kunden bzw. deren Datenverarbeitungsgeräte (im Folgenden auch "Ziel-Plattformen" genannt) zu verteilen. Die Verfahren zur Verteilung von Software bzw. Software-Korrekturprogrammen werden häufig unter dem Oberbegriff "Update" durchgeführt. Häufig stellt dabei der Hersteller bzw. Händler/Lieferant von Programmen einen Server bereit, von dem einzelne Benutzer bzw. deren Datenverarbeitungsgeräte ("Ziel-Plattformen") die entsprechenden Daten, Dateien, Programmpakete etc. bei Bedarf herunterladen können.

Dieses Verfahren arbeitet häufig sicher und effizient für Einzelbenutzer und kleine Organisationen. Bei einer großen Anzahl von Benutzern bzw. großen Organisationen, bei denen eine Vielzahl von Ziel-Plattformen innerhalb einer kurzen Zeitspanne mit einer neuen Software bzw. Software-Korrekturprogrammen versorgt werden müssen, stößt ein solches zentral organisiertes Verfahren schnell an seine Grenzen, wenn nicht Mechanismen zur Laststeuerung und zur Lastverteilung bereitgestellt werden. Solche Mechanismen sind jedoch häufig komplex, aufwendig und fehleranfällig.

Zur Lösung dieses Problems werden häufig hierarchisch organisierte Strukturen bereitgestellt, die sog. Software-Deployment-Services, bei denen in der Regel zwei-stufig von einem zentralen Software-Server die entsprechenden Daten und Dateien auf eine zweite Schicht mit einigen weiteren lokalen Software-Servern verteilt ("repliziert") werden, wobei die eigentlichen Ziel-Plattformen von jeweils einem Server dieser zweiten Ebene versorgt werden. Ein solches Verfahren hat jedoch zum Nachteil, dass herstellerseitig bzw. lieferantenseitig eine entsprechende Anzahl von Servern bereitgestellt werden muss und überdies von zentraler Seite aus die Last-Topologie bei der Verteilung der Software bzw. Software-Korrekturprogramme vorausberechnet werden muss, um eine reibungslose und schnelle Versorgung der Ziel-Plattformen zu gewährleisten. Häufig wird diesen Problemen dadurch Rechnung getragen, dass eine entsprechende Über-Dimensionierung der Server- und Leitungskapazitäten bzw. Übertragungs-Bandbreiten vorgenommen wird, was andererseits natürlich zu einer ineffizienten Ausnutzung dieser Ressourcen führen kann. Ähnliche Nachteile entstehen durch andere Abhilfemaßnahmen, wie das zeitversetzte Versorgen unterschiedlicher Ziel-Plattformen oder durch "Lastabwurf" im Fall von Lastspitzen. Eine entsprechende "Streckung" des Ressourcenbedarfs kann auch durch Anwendung eines sog. "Round-Robin-Verfahrens" also der Verteilung von mehreren konkurrierenden Anfragen auf sog. Zeitschlitze, erfolgen. Auch dabei erkauft man sich die bessere Stabilität in der Ausnutzung von Ressourcen durch eine verzögerte Versorgung der einzelnen Ziel-Plattformen.

In US 7,162,538 B1 ist ein Software Verteilungssystem beschrieben, bei dem anfänglich die Software zusammen mit einer Liste von Empfängeradressen von einem Server an einen oder mehrere Benutzer verteilt wird. Diese Benutzer können dann dazu befähigt werden das Softwarepaket an andere Benutzer weiterzuleiten, die in der Liste von Empfängerbenutzern enthalten sind. Jeder der Benutzer in einer ersten Benutzerebene authentifiziert das Paket, indem eine Nachricht zurück an den Server beispielsweise über einen Rückkanal oder über einen anderen Kanal bereitgestellt wird. Der Authentifizierungsprozess stellt sicher, dass nur autorisierte Software an den Benutzer verteilt wurde, und verhindert, dass von außen versucht wird, das System zu stören. Die Kontrolle der Empfängerliste zur Verteilung der Software erfolgt daher zentral durch den Server und hierarchisch in Benutzerebenen.

Es ist also eine Aufgabe der vorliegenden Erfindung, ein Verfahren zur sicheren, effizienten und ressourcensparenden Verteilung von Software und/oder Software-Korrekturprogrammen an Datenverarbeitungsgeräte vorzuschlagen.

Die Aufgabe wird durch das Verfahren gemäß Patentanspruch 1 und durch einen Datenverarbeitungsgerät gemäß Patentanspruch 10 gelöst.

Dabei wird ein Verfahren vorgeschlagen, bei dem zur Bereitstellung und Verteilung von Software und oder Software-Korrekturprogrammen ("Updates") multiple verteilte Strukturen, sog. virtuelle Gemeinschaften, verwendet werden. Die Ziel-Plattform, die mit der Software und/oder das Software-Korrekturprogramm versorgt werden soll, ist dabei Mitglied einer solchen virtuellen Gemeinschaft. Die Zuordnung der zu versorgenden Ziel-Plattform zu der ausgewählten virtuellen Gemeinschaft erfolgt dabei durch den Hersteller oder Lieferanten der Software bzw. des Software-Korrekturprogrammes. Dadurch kann der Hersteller bzw. Händler/Lieferant seine Kunden bzw. deren Ziel-Plattformen flexibel mit Software bzw. Software-Korrekturprogrammen versorgen, ohne selbst eine Anzahl von Software-Servern bereitstellen zu müssen. Dabei wird die Software bzw. das Software-Korrekturprogramm innerhalb der virtuellen Gemeinschaft von einem Ziel-Client zum anderen bzw. zu mehreren anderen nach Art eines Peer-to-Peer Netzwerkes ("P2P") weitergegeben, so dass mit einer wachsenden Anzahl von Ziel-Clients innerhalb einer virtuellen Gemeinschaft auch die Zahl der die Software bzw. Software-Korrekturprogramme bereitstellenden Mitglieder, also der weiteren Ziel-Clients, zunimmt. Dadurch ergibt sich eine gleichmäßige Ausnutzung der Ressourcen, und damit auch eine gleichmäßige Lastverteilung.

Die genannten Vorteile werden auch durch ein Datenverarbeitungsgerät erreicht, welches einen Ziel-Client im Sinne des vorgenannten Verfahrens bildet. Dabei kann ein solcher Ziel-Client, also eine solches Datenverarbeitungsgerät, gleichzeitig oder wechselweise sowohl zur Bereitstellung von Software bzw. Software-Korrekturprogrammen, als auch als Empfänger ("Ziel") solcher Software-Produkte verwendet werden.

Vorteilhafte Ausgestaltungen des erfindungsgemäßen Verfahrens sind in den abhängigen Patentansprüchen angegeben. Die dabei beschriebenen Merkmale und die damit verbundenen Vorteile gelten sinngemäß auch für das erfindungsgemäße Datenverarbeitungsgerät.

Für die Bereitstellung und/oder Verteilung von ein- und derselben Software bzw. Software-Korrekturprogramm können auch mehrere virtuelle Gemeinschaften verwendet werden. Dies bietet sich insbesondere dann an, wenn für die zu erreichenden Ziel-Plattformen mehrere (verschiedene) virtuelle Gemeinschaften verfügbar sind. Dazu kann auch ein bereits auf einer Ziel-Plattform installiertes Softwareprodukt Adressinformationen oder Zugangsparameter für eine solche virtuelle Gemeinschaft aufweisen, die in den Fällen kontaktiert werden soll bzw. der in solchen Fällen beigetreten werden soll, in denen eine andere, bevorzugte virtuelle Gemeinschaft nicht kontaktiert werden kann. So kann beispielsweise ein Software-Hersteller, der für jedes Land, in dem seine Produkte vertrieben werden, eine virtuelle Gemeinschaft zur Bereitstellung von Software-Korrekturprogrammen unterstützt, zusätzlich eine weitere virtuelle Gemeinschaft initiieren oder unterstützen, bei der ebenfalls alle Software-Korrekturprogramme in den verschiedenen Landes-Varianten zugänglich sind, so das im Fall von Überlastungen oder anderen Engpässen eine Ziel-Plattform temporär und kurzfristig Mitglied dieser ersatzweise verwendbaren virtuellen Gemeinschaft werden kann.

Eine sichere Versorgung mit einer stets aktuellen Version der zu bereitstellenden bzw. zu verteilenden Software und/oder Software-Korrekturprogrammen wird erreicht, wenn die Software bzw. das Software-Korrekturprogramm durch den Lieferanten bzw. Hersteller auf zumindest eine Ziel-Plattform der zumindest einen virtuellen Gemeinschaft übertragen wird. Dazu sind die Ziel-Plattformen dieser virtuellen Gemeinschaft vorteilhaft so eingerichtet, dass bei Vorhandensein von Software bzw. Software-Korrekturprogrammen unterschiedlicher Ausgabestände (Versionen) stets die aktuellste bekannt gemacht und weitergegeben wird, und die nicht-aktuellen Versionen als solche gekennzeichnet werden. Dabei können vorteilhaft die nicht-aktuellen Versionen aus Kompatibilitätsgründen weiterhin zur bedarfsweisen Übertragung an andere Ziel-Plattformen bereitgehalten werden.

Vorteilhafterweise wird durch zumindest eine Ziel-Plattform der virtuellen Gemeinschaft eine Administrations-Funktion ausgeübt. Dabei kann durch die Administrations-Funktion eine Zugriffskontrolle auf Funktionen der virtuellen Gemeinschaft ausgeübt werden. Insbesondere kann dabei solchen Ziel-Plattformen bzw. deren Benutzern eine Zugangsberechtigung verweigert werden, wenn diese gegen Regeln der virtuellen Gemeinschaft verstoßen, beispielsweise durch Inverkehrbringen manipulierter Programme, Viren, Schadsoftware etc.. Weiterhin kann die Administrations-Funktion vorteilhaft zur Laststeuerung bei der Nutzung von Funktionen und/oder dem Bezug von der Software bzw. dem Software-Korrekturprogramm realisiert werden. Dabei können insbesondere in den Fällen, in denen bereits mehrere Ziel-Plattformen das gewünschte Software-Produkt vorhalten, solche dieser Ziel-Plattformen entlastet werden, die zweitweise einen Ressourcenmangel aufweisen. Dieses Konzept kann weiterhin vorsehen, dass die Administrations-Funktion eine lastgesteuerte Unterteilung der virtuellen Gemeinschaft in zumindest zwei temporäre virtuelle Sub-Gemeinschaften vornimmt. Anstelle der lastgesteuerten Unterteilung kann dabei auch eine Unterteilung nach anderen Kriterien erfolgen, insbesondere bezüglich der von den einzelnen Ziel-Plattformen (z.B. Firefox™ for Windows™, Mac OS X™, Linux etc.) bzw. deren Benutzern bevorzugten Sprache, so dass bezüglich der in der virtuellen Gemeinschaft bzw. virtuellen Sub-Gemeinschaft vorgehaltenen Hilfe-Funktionen, beispielsweise in Form eines Chats oder eines Forums, die jeweiligen Benutzer jeweils einen Ansprechpartner in ihrer Sprache finden. Solche Hilfsangebote können vorteilhaft auch unabhängig von dem Bezug von Software bzw. Software-Korrekturprogrammen genutzt werden.

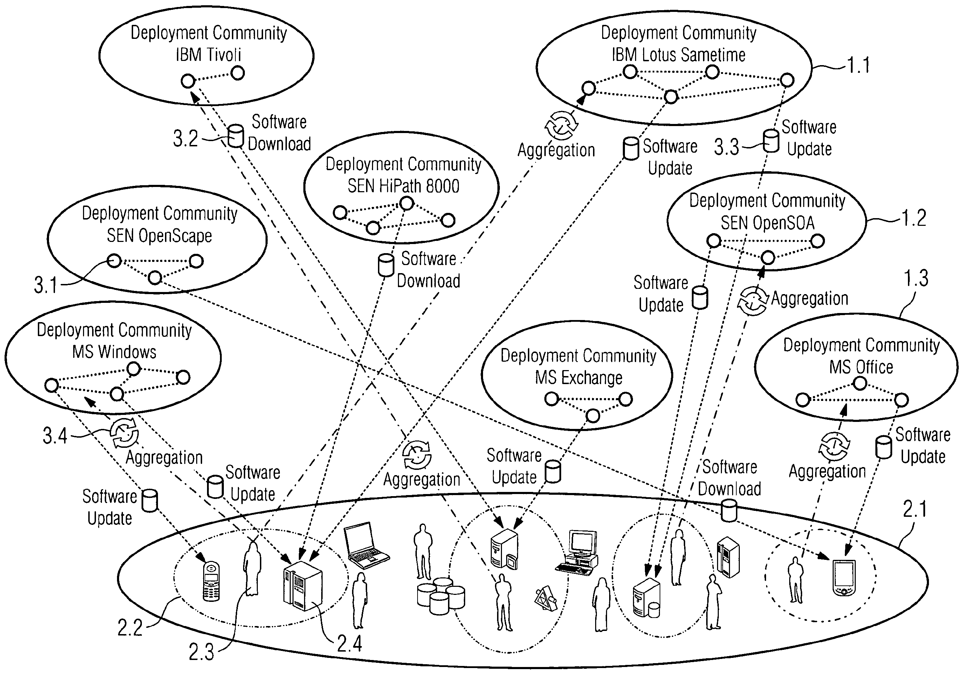

Ausführungsbeispiele für ein erfindungsgemäßes Verfahren und Datenverarbeitungsgerät sind nachfolgend anhand der Zeichnung erläutert.

Dabei zeigt die einzige Figur in schematischer Darstellung eine Anordnung von Benutzern und deren Ziel-Plattformen, deren Aggregation in virtuellen Gemeinschaften und die Übertragung von Software- bzw. Software-Korrekturprogrammen.

Die Figur zeigt eine Anordnung, in der Benutzer Computer oder ähnliche Software-verwendende Geräte betreiben, wobei solche Computer, Server, PDAs etc. im Folgenden als "Ziel-Plattformen" bezeichnet werden. Die Anwendungen, Programme, bzw. Programm-Pakete, für die neue Software-Versionen oder Software-Updates (im Folgenden Software-Korrekturprogramme genannt) bezogen werden sollen, werden im Folgenden auch als "Objekte" bezeichnet. Die Benutzer und deren Ziel-Plattformen mit den Objekten sind in der Figur in der unteren Ebene mit dem Bezugszeichen 2.1 symbolhaft dargestellt.

Im Folgenden wird dargestellt, dass Benutzer, bzw. deren Ziel-Plattformen und Objekte, die an der Software-Verteilung für ein bestimmtes Objekt interessiert sind, sich in einer virtuellen Gemeinschaft, auch Deployment-Community genannt, aggregieren, also zu einer Gemeinschaft zusammen finden. Dabei kann die Software-Verteilung den "Update" oder "Download" für verschiedene Objekte beinhalten, beispielsweise ein bestimmtes Betriebsystem, Applikationen, Software-Komponente, Plug-Ins, Firmware bis hin zu ganzen Service-Packs oder komplette Software-Releases und Upgrades. Die genannten virtuellen Gemeinschaften (Communities) sind dabei Aggregationen, die sich mit einer gemeinsamen Zielsetzung, nämlich dem Austausch der jeweiligen Software bzw. Software-Korrekturprogramme, zusammenfinden und deren Entitäten (Ziel-Plattformen, Objekte) untereinander mit einer gewissen Regelmäßigkeit und Verbindlichkeit auf computer-vermitteltem Wege Informationen und Daten austauschen und Kontakte knüpfen und auch wieder lösen. Neben dem reinen Austausch der Software bzw. Software-Korrekturprogramme bieten die Communities auch Hilfsangebote in Form von Foren, Newsgroups, Chats, etc..

Die Summe aller dieser Deployment-Communities in einem Netzwerk bzw. dem Internet wird dabei in der Figur durch die dargestellte Topologie repräsentiert, in der die Ressourcen der Benutzer derart organisiert sind, dass diese - ggf. auch mehrfach - über verschiedene dieser Deployment-Communities verteilt sind.

Die Figur zeigt verschiedene virtuelle Gemeinschaften (Deployment-Communities), die in der Figur in verschiedenen Ebenen gemäß des Herstellers desjenigen Software-Produktes organisiert sind, für welches die Software bzw. Software-Korrekturprogramme ausgetauscht werden sollen. Dabei stellt die mit dem Bezugszeichen 1.1 gekennzeichnete Ebene zwei virtuelle Gemeinschaften des Herstellers IBM dar, wobei die Mitglieder dieser virtuellen Gemeinschaften dem gemeinsamen Ziel folgen, entweder für das Produkt IBM-Tivoli (linksseitig gezeigte Anordnung) oder das Produkt Lotus Sametime (in der Figur rechts) Software-Korrekturprogramme oder vollständige Software-Versionen zwischen den dort aggregierten Benutzern, Ziel-Plattformen oder Objekten auszutauschen. Die Mitglieder dieser (und der anderen gezeigten) virtuellen Gemeinschaften können dabei auch als "Peers" bezeichnet werden, weil sie nach Art eines "Peer-to-Peer-Netzwerkes" die fraglichen Dateien und Informationen direkt miteinander austauschen.

Analog zu der zuerst genannten Ebene 1.1 stellt die Ebene 1.2 exemplarisch drei Deployment-Communities der Fa. Siemens Enterprise Communications (3.1) dar, wobei hier jeweils für die Produkte OpenScape, HighPath 8000 oder OpenSOA Software-Downloads bzw. Software-Korrekturprogramme ausgetauscht werden. Analog dazu stellt die Ebene 1.3 exemplarisch drei virtuelle Gemeinschaften der Fa. Microsoft für die Produkte Microsoft Windows, Microsoft Exchange und Microsoft Office dar. Selbstverständlich sind die genannten Firmen hier exemplarisch für alle möglichen Hersteller und auch Open-Source-Projekte (wie z.B. Eclipse Foundation oder OSGi Alliance) genannt; ebenso sind die Produkte und deren Namen willkürlich gewählt und nicht beschränkend zu interpretieren.

Wie bereits oben ausgeführt, stellt die Ebene 2.1 exemplarisch die Menge aller global verteilten und durch Netzwerke verbundene Clients und Anlagen von Usern, Kunden, Organisationen (allgemein: Benutzern) dar. Dabei können ein- und demselben Benutzer entweder ein einzelnes Gerät oder auch mehrere Geräte zugeordnet sein; letzterer Fall ist mit dem Bezugszeichen 2.2 dargestellt.

Ein Benutzer und dessen Zielplattform bzw. Objekt kann entweder nur in einer einzigen virtuellen Gemeinschaft aggregiert sein, oder aber auch gleichzeitig in mehreren virtuellen Gemeinschaften, wie in der Figur mit dem Bezugszeichen 2.3 dargestellt. Eine mehrfache Aggregation eines Benutzers in unterschiedlichen virtuellen Gemeinschaften (Communities) kann beispielsweise dadurch zustande kommen, dass dieser Benutzer verschiedene Software-Produkte (Objekte) auf einem Gerät (2.4, Ziel-Plattform) installiert hat, oder dass der Benutzer mehrere verschiedene Geräte mit unterschiedlicher Software besitzt.

Um eine Software bzw. ein Software-Korrekturprogramm in einer virtuellen Gemeinschaft verteilen zu können, muss diese Software bzw. das Software-Korrekturprogramm zunächst einmal zumindest einem Mitglied der virtuellen Gemeinschaft zur Verfügung gestellt werden. Dies wird durch die Hersteller der Software bzw. Software-Korrekturprogramme geleistet, indem sie das fragliche Software-Produkt bzw. vorteilhafter Weise ihre freigegebenen Software-Archivsysteme als Ressource in zumindest eine Deployment-Community einbringen, wodurch die Software-Korrekturprogramme und Downloads initial auf wenigstens einem "Peer" innerhalb der virtuellen Gemeinschaft zur Verteilung bereit stehen, wobei in dem Fall, in dem ein Hersteller sein Software-Archivsystem einbringt, eben jenes Soft-Software-Archivsystem zu einem "Peer" in der zumindest einen virtuellen Gemeinschaft wird.

Die virtuellen Gemeinschaften sind vorzugsweise so organisiert, dass diese ihre Ressourcen und Benutzer selbsttätig koordinieren und integrieren. Dabei werden Basisfunktionalitäten wie Sicherheit, Abrechnung, Mitgliederverwaltung in der virtuellen Gemeinschaft selbst berücksichtigt. Ressourcen können dabei Cluster, Massenspeicher, Datenbanken, Anwendungen, Bandbreiten, Modems o.ä. sein.

In der Figur ist mit dem Bezugszeichen 3.2 mittels eines Pfeils exemplarisch ein Software-Download und mit einem weiteren Pfeil mit dem Bezugszeichen 3.3 ein Software-Update dargestellt, was voraussetzt, dass die betroffenen Benutzer, bzw. deren Ziel-Plattformen in den entsprechenden virtuellen Gemeinschaften aggregiert sind. Eine solche Aggregation, also das "Anmelden" des betroffenen Benutzers in der jeweiligen virtuellen Gemeinschaft, ist mit dem Pfeil mit dem Bezugszeichen 3.4 exemplarisch dargestellt. Die Aggregation des jeweiligen Benutzers in einer solchen virtuellen Gemeinschaft kann entweder dadurch erfolgen, dass der Benutzer aus eigenem Interesse an Software-Updates bzw. Software-Downloads für sein Objekt der entsprechenden virtuellen Gemeinschaft beitritt, oder aber dadurch, dass Hersteller oder Händler für ihre Objekte (Produkte) entsprechende virtuelle Gemeinschaften einrichten (organisieren) und die Benutzer anhand ihrer Kundenprofile dort hinzufügen. Eine entsprechende Zuordnung kann dabei bereits mit dem Objekt festgelegt sein, d.h., dass mit der Installation eines Objektes auf einer Ziel-Plattform dieses Objekt schon das Wissen bzw. den Zugang (Zugangsinformationen) über die zu verwendende virtuelle Gemeinschaft mit sich bringt. Vorzugsweise sind die Objekte in der Lage, anhand von Suchbegriffen und ähnlichen Mechanismen eine oder mehrere virtuelle Gemeinschaften selbst aufzufinden, bei denen eine Aggregation möglich ist.

Wegen der Transparenz der zu verwendenden Netzwerke, insbesondere des Internets, spielt die geografische Verteilung der Benutzer der virtuellen Gemeinschaften keine oder allenfalls eine untergeordnete Rolle.

Neben den bereits erwähnten Mitgliedern der virtuellen Gemeinschaften nimmt bevorzugt ein Mitglied der virtuellen Gemeinschaft zumindest temporär die Rolle eines "Community-Managers" an, wobei diese Rolle auch auf mehrere Mitglieder verteilt sein kann oder wechselweise von verschiedenen Mitgliedern ausgeführt werden kann. Man kann in einem rollenbasierten Ansatz auch sagen, dass zumindest ein Mitglied der virtuellen Gemeinschaft die "Rolle" des Community-Managers annehmen kann. Dieser Community-Manager kann die Benutzer der virtuellen Gemeinschaft insoweit verwalten, dass er den Zugang zu der virtuellen Gemeinschaft rollenbasiert kontrolliert und unter Zuhilfenahme von Messwerten über die Verfügbarkeit bzw. Auslastung von Ressourcen (also durch sog. Measurement Tools) die Lastverteilung innerhalb der virtuellen Gemeinschaft erfasst, protokolliert und steuert. Als Reaktion auf Lastspitzen und ähnliche Ereignisse kann das Mitglied mit der Rolle eines "Community-Managers" die virtuelle Gemeinschaft beispielsweise in temporäre oder dauerhafte Sub-Gemeinschaften unterteilen oder den Zugriff auf einzelne Ressourcen bzw. Mitglieder einschränken. Die Rolle des Community-Managers kann auch durch ein Steuerungsprogramm ausgeübt werden.

Ein weiteres Instrument zur Laststeuerung besteht darin, dass größere Software-Pakete, die meist ohnehin aus mehreren Teilen bestehen, auf mehrere Mitglieder der virtuellen Gemeinschaften verteilt werden, so dass von jedem dieser Mitglieder nur ein Teil des Software-Paketes bezogen werden kann. Weiterhin können einzelne Mitglieder der virtuellen Gemeinschaften wiederum in einer separaten virtuellen Gemeinschaft organisiert sein, die initial eine Software bzw. ein Software-Korrekturprogramm zu diesen ausgewählten Mitgliedern zur Verfügung stellt, so dass die zu verteilenden Software-Pakete bzw. Software-Korrekturprogramme nach dem Schneeballprinzip einer Vielzahl von Benutzern bzw. deren Ziel-Plattformen zur Verfügung gestellt werden kann.

## Patentansprüche

1. Verfahren zur Bereitstellung und Verteilung von Software (3.2) und/oder Software-Korrekturprogrammen (3.3),
a) wobei eine Ziel-Plattform (2.4) für die Software (3.2) bzw. das Software-Korrekturprogramm (3.3) als Mitglied zumindest einer virtuellen Gemeinschaft (3.1) aus einer Mehrzahl virtueller Gemeinschaften (3.1) mit weiteren Ziel-Plattformen (2.4) zugeordnet ist,
b) wobei die Ziel-Plattform (2.4) durch zumindest eine der weiteren Ziel-Plattformen (2.4) mit der Software (3.2) bzw. dem Software-Korrekturprogramm (3.3) versorgt wird,
wobei die Zuordnung der Ziel-Plattform zu der virtuellen Gemeinschaft (3.1) durch den Lieferanten oder Hersteller der Software (3.2) bzw. des Software-Korrekturprogramms (3.3) vorgenommen wird,
**dadurch gekennzeichnet, dass**
c) durch zumindest eine Ziel-Plattform (2.4) der virtuellen Gemeinschaft (3.1) eine Administrations-Funktion für die Bereitstellung und Verteilung der Software (3.2) und/oder Software-Korrekturprogramme (3.3) innerhalb dieser virtuellen Gemeinschaft (3.1) ausgeübt wird, wobei durch die Administrations-Funktion eine Laststeuerung für den Bezug von der Software (3.2) bzw. dem Software-Korrekturprogramm (3.3) realisiert und eine Zugriffskontrolle auf Funktionen der virtuellen Gemeinschaft (3.1) ausgeübt wird, und
d) die virtuelle Gemeinschaft (3.1) ihre Ressourcen und Benutzer (2.3) selbsttätig koordiniert und integriert, wobei Basisfunktionalitäten, z.B. Sicherheit, Abrechnung, Mitgliederverwaltung, in der virtuellen Gemeinschaft (3.1) selbst berücksichtigt werden.

2. Verfahren nach Patentanspruch 1,
**dadurch gekennzeichnet, dass**
ein Mitglied der virtuellen Gemeinschaft (3.1) zumindest temporär die Rolle eines Community-Managers zur Verwaltung von Benutzern (2.3) der virtuellen Gemeinschaft (3.1) annimmt, diese Rolle auf mehrere Mitglieder verteilt ist, oder diese Rolle wechselweise von verschiedenen Mitgliedern ausgeführt wird, wobei die Rolle des Community-Managers durch ein Steuerungsprogramm ausgeübt werden kann, und
der Community-Manager Benutzer der virtuellen Gemeinschaft (3.1) insoweit verwaltet, dass er den Zugang zu der virtuellen Gemeinschaft (3.1) rollenbasiert kontrolliert und unter Zuhilfenahme von Messwerten über die Verfügbarkeit bzw. Auslastung von Ressourcen mittels sogenannter Measurement Tools die Lastverteilung innerhalb der virtuellen Gemeinschaft (3.1) erfasst, protokolliert und steuert.

3. Verfahren nach Patentanspruch 1 oder 2,
**dadurch gekennzeichnet, dass**
mehrere virtuelle Gemeinschaften (3.1) für die gleiche Software (3.2) bzw. das gleiches Software-Korrekturprogramm (3.3) vorgesehen werden.

4. Verfahren nach einem der vorhergehenden Patentansprüche,
**dadurch gekennzeichnet, dass**
die Software (3.2) bzw. Software-Korrekturprogramm (3.3) durch den Lieferanten bzw. Hersteller auf zumindest eine Ziel-Plattform (2.4) der zumindest einen virtuellen Gemeinschaft (3.1) übertragen wird.

5. Verfahren nach der vorhergehenden Patentansprüche,
**dadurch gekennzeichnet**, dassnicht-aktuelle Versionen der Software (3.2) und/oder Software-Korrekturprogramme (3.3) als solche gekennzeichnet werden und die nicht-aktuellen Versionen aus Kompatibilitätsgründen weiterhin zur bedarfsweisen Übertragung an andere Ziel-Plattformen (2.4) bereitgehalten werden.

6. Verfahren nach einem der vorhergehenden Patentansprüche,
**dadurch gekennzeichnet, dass**
solchen Ziel-Plattformen (2.4) bzw. deren Benutzern (2.3) eine Zugangsberechtigung verweigert werden, die gegen Regeln der virtuellen Gemeinschaft (3.1) verstoßen, insbesondere durch Inverkehrbringen manipulierter Programme, von Viren oder von Schadsoftware.

7. Verfahren nach einem der vorhergehenden Patentansprüche,
**dadurch gekennzeichnet, dass**
durch die Administrations-Funktion eine Laststeuerung für die Nutzung von Funktionen realisiert wird.

8. Verfahren nach Patentanspruch 7,
**dadurch gekennzeichnet, dass**
ein Instrument zur Laststeuerung darin besteht, dass Software-Pakete (3.2, 3.3) auf mehrere Mitglieder der virtuellen Gemeinschaften (3.1) verteilt werden, so dass von jedem dieser Mitglieder nur ein Teil des Software-Paketes (3.2, 3.3) bezogen werden kann.

9. Verfahren nach einem der vorhergehenden Patentansprüche,
**dadurch gekennzeichnet, dass**
durch die Administrations-Funktion eine lastgesteuerte Unterteilung der virtuellen Gemeinschaft (3.1) in zumindest zwei virtuelle Sub-Gemeinschaften vorgenommen wird.

10. Verfahren nach einem der vorhergehenden Patentansprüche,
**dadurch gekennzeichnet, dass**
durch die virtuelle Gemeinschaft (3.1) der zumindest einen Ziel-Plattform (2.4) Hilfsangebote zur Verfügung gestellt werden.

11. Verfahren nach einem der vorhergehenden Patentansprüche,
**dadurch gekennzeichnet, dass**
das Anmelden (3.4) eines Benutzers (2.3) der Ziel-Plattform (2.4) in der virtuellen Gemeinschaft (3.1) dadurch erfolgt, dass die Lieferanten oder Hersteller für ihre Software (3.2) bzw. Software-Korrekturprogramme (3.3) entsprechende virtuelle Gemeinschaften (3.1) einrichten und die Benutzer (2.3) anhand ihrer Kundenprofile dort hinzufügen.

12. Verfahren nach Patentanspruch 11,
**dadurch gekennzeichnet, dass**
die Anwendungen, Programme, bzw. Programm-Pakete, für die eine neue Software-Version der Software (3.2) bzw. das Software-Korrekturprogramm (3.3) anhand von Suchbegriffen und ähnlichen Mechanismen eine oder mehrere virtuelle Gemeinschaften (3.1) selbst auffinden, bei denen eine Anmeldung (3.4) möglich ist.

13. Verfahren nach einem der vorhergehenden Patentansprüche,
**dadurch gekennzeichnet, dass**
eine bereits auf einer Ziel-Plattform (2.4) installierte Software (3.2) bzw. das Software-Korrekturprogramm (3.3) Adressinformationen oder Zugangsparameter für eine virtuelle Gemeinschaft aufweist, die in den Fällen kontaktiert werden soll bzw. der in solchen Fällen beigetreten werden soll, in denen eine andere, bevorzugte virtuelle Gemeinschaft (3.1) nicht kontaktiert werden kann.

14. Datenverarbeitungsgerät zur Verwendung von Software und/oder Software-Korrekturprogrammen,
**dadurch gekennzeichnet, dass**
das Datenverarbeitungsgerät zur Partizipierung an einem der Verfahren gemäß einem der Patentansprüche 1 bis 13 eingerichtet ist.

15. Anordnung aus einer Anzahl von Datenverarbeitungsgeräten nach Patentanspruch 14,
**dadurch gekennzeichnet, dass**
das Datenverarbeitungsgerät eine Ziel-Plattform (2.4) ist und die Anordnung aus einer Anzahl von Ziel-Plattformen (2.4) derart gebildet ist, dass die Ziel-Plattformen (2.4) in einer virtuellen Gemeinschaft (3.1) eingerichtet sind.

## Claims

1. A method for providing and distributing software (3.2) and/ or software correction programs (3.3),
a) wherein a target platform (2.4) for the software (3.2) or the software correction program (3.3) as member of at least one virtual community (3.1) from a plurality of virtual communities (3.1) is associated to further target platforms (2.4),
b) wherein the target platform (2.4) is provided with the software
(3.2) or the software correction program (3.3) by at least one
of the further target platforms (2.4),
wherein the association of the target platform to the virtual community (3.1) is implemented by the supplier or manufacturer of the software (3.2) or the software correction program (3.3), **characterized in that**
c) one administration function for the providing and distributing
of the software (3.2) and/or software correction programs (3.3) is exercised within this virtual community (3.1) by at least one target platform (2.4) of the virtual community (3.1), wherein load control for the obtaining of the software (3.2) or the software correction program (3.3) is realized by the administration function, and access control is exercised on functions of the virtual community (3.1), and
d) the virtual community (3.1) coordinates and integrates its resources and users (2.3) independently, wherein base functionalities, e.g., security, accounting, member administration, are taken into consideration in the virtual community (3.1) itself.

2. The method according to claim 1,
**characterized in that**
a member of the virtual community (3.1) assumes the role of a community manager for administration of users (2.3) of the virtual community (3.1), at least temporarily, this role being distributed to several members, or this role being performed alternately by different members, wherein the role of the community member can be exercised by a control program, and the community manager administers users of the virtual community (3.1) insofar, as he controls the access to the virtual community (3.1) based on roles, and captures, protocols and controls the availability or load distribution of resources within the virtual community (3.1) by means of so called measurement tools.

3. The method according to claim 1 or 2,
**characterized in that**
several virtual communities (3.1) are provided for the same software (3.2) or the same software correction program (3.3).

4. A method according to any of the preceding claims,
**characterized in that**
the software (3.2) or the software correction program (3.3) is transferred by the supplier of manufacturer to at least one target platform (2.4) of the at least one virtual community (3.1) .

5. A method according to any of the preceding claims,
**characterized in that**
non-current versions of the software (3.2) and/or software correction programs (3.3) are characterized as such, and the non-current versions are kept available for transfer to other target platforms (2.4), as required, due to compatibility reasons.

6. The method according to any of the preceding claims,
**characterized in that**
access authorization is denied to such target platforms (2.4) or the users (2.3) thereof, which violate rules of the virtual community (3.1), particularly by placing manipulated programs, viruses or malicious software in circulation.

7. The method according to any of the preceding claims,
**characterized in that**
load control for the utilization of functions is realized by the administration function.

8. The method according to claim 7,
**characterized in that**
an instrument for load control consists of software packets (3.2, 3.3) being distributed to several members of the virtual communities (3.1), so that each of these members can only obtain a portion of the software packet (3.2, 3.3).

9. The method according to any of the preceding claims,
**characterized in that**
a load-controlled classification of the virtual community (3.1) is implemented by the administration function in at least two virtual sub-communities.

10. The method according to any of the preceding claims,
**characterized in that**
offers of assistance are provided to the at least one target platform (2.4) by the virtual community (3.1).

11. The method according to any of the preceding claims,
**characterized in that**
the log-in (3.4) of a user (2.3) of the target platform (2.4) in the virtual community (3.1) is being implemented **in that** the suppliers or manufacturers create corresponding virtual communities (3.1) for their software (3.2) or software correction programs (3.3) and add the users (2.3) to such programs according to their client profiles.

12. The method according to claim 11,
**characterized in that**
the applications, programs or program packets themselves locate one or more virtual communities (3.1) having log-in possibility (3.4), for the one new software version of the software (3.2) or the software correction program, (3.3) by means of search terms and similar mechanisms.

13. The method according to any of the preceding claims,
**characterized in that**
software (3.2) or the software correction program (3.3) already installed on a target platform (2.4) has address information or access parameters for a virtual community, which should be contacted in the cases, or which should be joined in such cases, in which another, preferred virtual community (3.1) cannot be contacted.

14. A data processing device for utilization of software and/or software correction programs
**characterized in that**
the data processing device is configured to participate in any of the methods according to any of claims 1 to 13.

15. An arrangement of a number of data processing devices according to claim 14,
**characterized in that**
the data processing device is a target platform (2.4) and the arrangement is configured from a number of target platforms (2.4) in such way, that the target platforms (2.4) are arranged in a virtual community (3.1).

## Revendications

1. Procédé de préparation et de répartition de logiciels (3.2) et/ou de programmes de correction de logiciel (3.3),
a) dans lequel une plateforme cible (2.4) pour le logiciel (3.2) ou le programme de correction de logiciel (3.3) est associée en tant que membre d'au moins une communauté virtuelle (3.1) parmi une pluralité de communautés virtuelles (3.1) à d'autres plateformes cibles (2.4),
b) dans lequel la plateforme cible (2.4) est approvisionnée par le biais d'au moins une des autres plateformes cibles (2.4) avec le logiciel (3.2) ou le programme de correction de logiciel (3.3),
dans lequel l'association de la plateforme cible à la communauté virtuelle (3.1) est effectuée par le biais du fournisseur ou du fabricant du logiciel (3.2) ou du programme de correction de logiciel (3.3),
**caractérisé en ce que**
c) par le biais d'au moins une plateforme cible (2.4) de la communauté virtuelle (3.1), une fonction d'administration pour la préparation et la répartition des logiciels (3.2) et/ou des programmes de correction de logiciel (3.3) est exercée à l'intérieur de cette communauté virtuelle (3.1), dans lequel, par le biais de la fonction d'administration est réalisée une commande de charge pour l'acquisition du logiciel (3.2) ou du programme de correction de logiciel (3.3) et est exercé un contrôle d'accès à des fonctions de la communauté virtuelle (3.1), et
d) la communauté virtuelle (3.1) coordonne et intègre de manière autonome ses ressources et utilisateurs (2.3), dans lequel des fonctionnalités de base, par exemple sécurité, facturation, gestion des membres, sont prises en compte dans la communauté virtuelle (3.1) elle-même.

2. Procédé selon la revendication 1,
**caractérisé en ce que**
un membre de la communauté virtuelle (3.1) prend au moins temporairement le rôle d'un gestionnaire de communauté pour la gestion des utilisateurs (2.3) de la communauté virtuelle (3.1), ce rôle est réparti sur plusieurs membres, ou ce rôle est exécuté en alternance par différents membres, dans lequel le rôle du gestionnaire de communauté peut être exercé par un programme de commande, et
le gestionnaire de communauté gère des utilisateurs de la communauté virtuelle (3.1) dans la mesure où il contrôle sur la base d'un rôle l'accès à la communauté virtuelle (3.1) et à l'aide de valeurs de mesures sur la disponibilité ou la charge de ressources au moyen d'utilitaires dits de mesure, détecte, rend compte et commande la répartition de charges à l'intérieur de la communauté virtuelle (3.1).

3. Procédé selon la revendication 1 ou 2,
**caractérisé en ce que**
plusieurs communautés virtuelles (3.1) sont prévues pour le même logiciel (3.2) ou le même programme de correction de logiciel (3.3).

4. Procédé selon l'une quelconque des revendications précédentes, **caractérisé en ce que**
le logiciel (3.2) ou le programme de correction de logiciel (3.3) est transmis par le biais du fournisseur ou du fabricant à au moins une plateforme cible (2.4) de l'au moins une communauté virtuelle (3.1).

5. Procédé selon l'une quelconque des revendications précédentes,
**caractérisé en ce que** des versions non actuelles des logiciels (3.2) et/ou des programmes de correction de logiciel (3.3) sont caractérisées en tant que telles et les versions non actuelles sont gardées disponibles pour des raisons de compatibilité en outre pour la transmission, si nécessaire, à d'autres plateformes cibles (2.4).

6. Procédé selon l'une quelconque des revendications précédentes, **caractérisé en ce que**
un droit d'accès est refusé aux plateformes cibles (2.4) ou à leurs utilisateurs (2.3) qui transgressent des règles de la communauté virtuelle (3.1), en particulier par la mise en circulation de programmes manipulés, de virus ou de logiciels nuisibles.

7. Procédé selon l'une quelconque des revendications précédentes, **caractérisé en ce que**
par le biais de la fonction d'administration est réalisée une commande de charge pour l'utilisation de fonctions.

8. Procédé selon la revendication 7,
**caractérisé en ce que**
un instrument pour la commande de charge consiste **en ce que** des ensembles de logiciels (3.2, 3.3) sont répartis sur plusieurs membres de la communauté virtuelle (3.1) de sorte que seulement une partie de l'ensemble de logiciels (3.2, 3.3) peut être acquise par chacun de ces membres.

9. Procédé selon l'une quelconque des revendications précédentes, **caractérisé en ce que**
par le biais de la fonction d'administration est réalisée une sous-division, commandée selon la charge, de la communauté virtuelle (3.1) en au moins deux sous-communautés.

10. Procédé selon l'une quelconque des revendications précédentes, **caractérisé en ce que**,
par le biais de la communauté virtuelle (3.1), des offres d'aide sont mises à disposition de l'au moins une plateforme cible (2.4).

11. Procédé selon l'une quelconque des revendications précédentes, **caractérisé en ce que**
l'inscription (3.4) d'un utilisateur (2.3) de la plateforme cible (2.4) dans la communauté virtuelle (3.1) a lieu par le fait que les fournisseurs ou les fabricants installent pour leurs logiciels (3.2) ou programmes de correction de logiciel (3.3) des communautés virtuelles correspondantes (3.1) et y ajoutent les utilisateurs (2.3) à l'aide de leurs profils de clients.

12. Procédé selon la revendication 11,
**caractérisé en ce que**
les applications, des programmes ou des ensembles de programmes, pour qui une nouvelle version de logiciel du logiciel (3.2) ou le programme de correction de logiciel (3.3) trouvent eux-mêmes, à l'aide de termes de recherche et de mécanismes similaires, une ou plusieurs communautés virtuelles (3.1) auprès desquelles une inscription (3.4) est possible.

13. Procédé selon l'une quelconque des revendications précédentes, **caractérisé en ce que**
un logiciel (3.2) déjà installé sur une plateforme cible (2.4) ou le programme de correction de logiciel (3.3) comprend des informations d'adresses ou des paramètres d'accès pour une communauté virtuelle qui doit être contactée dans les cas ou qui doit faire l'objet d'une adhésion dans des cas dans lesquels une autre communauté virtuelle (3.1) préférée ne peut pas être contactée.

14. Appareil de traitement de données pour l'emploi de logiciels et/ou de programmes de correction de logiciel,
**caractérisé en ce que**
l'appareil de traitement de données est configuré pour la participation à un des procédés selon l'une quelconque des revendications 1 à 13.

15. Agencement composé d'un certain nombre d'appareils de traitement de données selon la revendication 14,
**caractérisé en ce que**
l'appareil de traitement de données est une plateforme cible (2.4) et l'agencement est composé d'un certain nombre de plateformes cibles (2.4) de manière que les plateformes cibles (2.4) sont installées dans une communauté virtuelle (3.1).
